# EUROPÄISCHE PATENTANMELDUNG

(11) **EP 1 694 000 A1**
(43) Veröffentlichungstag der Anmeldung: **23.08.2006**
(21) Anmeldenummer: 05003522.9
(22) Anmeldetag: 18.02.2005
(51) Int. Cl.: H04L 12/56

(54) **Verfahren zum Betrieb einer Teilnehmerstation und zum Betrieb einer netzseitigen Einrichtung eines Funkkommunikationssystems**

(71) Anmelder: SIEMENS AKTIENGESELLSCHAFT, 80333 München (DE)
(72) Erfinder: Breuer, Volker, 16727 Bötzow (DE); Krause, Jörn, Dr., 12107 Berlin (DE); Kroth, Norbert, 14471 Potsdam (DE); Lamprecht, Frank, 10439 Berlin (DE); Ulrich, Thomas, 67098 Bad Dürkheim (DE)

(57) **Zusammenfassung**

Bei einem Verfahren zum Betrieb einer Teilnehmerstation eines Funkkommunikationssystems, werden Daten eines Dienstes von der Teilnehmerstation über einen ersten Übertragungskanal in einer ersten Funkzelle gesendet und/oder empfangen. Die Teilnehmerstation empfängt während des Sendens und/oder Empfangens der Daten des Dienstes in der ersten Funkzelle wiederholt auf wenigstens einem Kontrollkanal wenigstens einer zweiten Funkzelle, um zu überwachen, ob dort eine für sie bestimmte Information übertragen wird, wobei der Empfang des Kontrollkanals erfolgt, ohne dass die Teilnehmerstation zuvor eine Nachricht in der ersten Funkzelle empfangen hat, die ein Übertragen der für die Teilnehmerstation bestimmten Information auf dem Kontrollkanal ankündigt. Weiterhin wird ein entsprechendes verfahren zum Betrieb einer netzseitigen Einrichtung sowie eine entsprechende Teilnehmerstation und eine netzseitige Einrichtung beschrieben.

## Beschreibung

Verfahren zum Betrieb einer Teilnehmerstation und zum Betrieb einer netzseitigen Einrichtung eines Funkkommunikationssystems Verfahren sowie Teilnehmerstation und netzseitige Einrichtung

Die Erfindung betrifft ein Verfahren zum Betrieb einer Teilnehmerstation und zum Betrieb einer netzseitigen Einrichtung eines Funkkommunikationssystems Verfahren sowie eine entsprechende Teilnehmerstation und eine entsprechende netzseitige Einrichtung

In Funkkommunikationssystemen werden Dienste angeboten, die sowohl für Datenübertragungen in Aufwärtsrichtung (uplink oder reverse link), d.h. von einer Teilnehmerstation zu einer Basisstation, als auch in Abwärtsrichtung (downlink oder for-ward link), d.h. von einer Basisstation zu einer Teilnehmerstation, möglichst hohe Datenraten ermöglichen. Zu diesem Zweck wurde beispielsweise in Funkzugangsnetzen von Funkkommunikationssystemen gemäß dem UMTS-Standard (UMTS: Universal Mobile Telecommunications System) die Verwaltung von Funkressourcen von den Funknetzsteuerungen (RNC: Radio Network Controller) in die Basisstationen (Node B) verlagert. In Aufwärtsrichtung wird der entsprechende Übertragungskanal als "enhanced uplink" oder als "E-DCH" bezeichnet und ist in dem UMTS-Standard 3GPP (3rd Generation Partnership Project) TS 25.309 V6.1.0 (2004-12). In Abwärtsrichtung wird das entsprechende Übertragungsverfahren HSDPA (High Speed Downlink Packet Access) und der für die Übertragung von Nutzdaten verwendete Übertragungskanal "HS-DSCH" (High Speed - Downlink Shared Channel) genannt. Beschrieben ist das HSDPA Verfahren beispielsweise in dem UMTS-Standard 3GPP TS 25.308 V6.3.0 (2004-12).

Damit vor allem zeitkritische Daten, beispielsweise unter Verwendung eines Internetprotokolls übertragene Sprachdaten (Voice over IP), möglichst schnell und verlustfrei übertragen werden können, wenn sich eine Teilnehmerstation von einer Funkzelle in eine andere Funkzelle bewegt und dadurch die Datenübertragung von.der einen Funkzelle in die andere Funkzelle verlagert werden muss, sind Verfahren und entsprechende Einrichtungen erforderlich, die einen möglichst schnellen Wechsel zwischen Funkzellen ermöglichen. Bisher bekannte Verfahren zum Funkzellenwechsel (Handover-Verfahren), beispielsweise gemäß dem HSDPA-Standard, erfordern eine Vielzahl von Signalisierungsnachrichten und sind daher zu langsam, um insbesondere zeitkritische Daten so zu übertragen, dass die Anforderungen an einen möglichst schnellen und Datenverlust freien Funkzellenwechsel erfüllt werden können. Bisherige Verfahren zum Funkzellenwechsel haben insbesondere den Nachteil, dass ein Benutzer einer Teilnehmerstation bei einem Funkzellenwechsel eine Unterbrechung beispielsweise einer Sprachübertragung bemerkt.

Der Erfindung liegt die Aufgabe zugrunde, ein vorteilhaftes Verfahren zum Betrieb einer Teilnehmerstation und zum Betrieb einer netzseitigen Einrichtung eines Funkkommunikationssystems Verfahren sowie eine entsprechende Teilnehmerstation und eine entsprechende netzseitige Einrichtung anzugeben, mittels derer für eine in einer Funkzelle erfolgenden Datenübertragung eine Zeit verringert wird, die benötigt wird, um die Datenübertragung alternativ oder zusätzlich in wenigstens einer weiteren Funkzelle durchzuführen.

Diese Aufgabe wird mit dem Verfahren zum Betrieb einer Teilnehmerstation und dem Verfahren zum Betrieb einer netzseitigen Einrichtung eines Funkkommunikationssystems sowie der Teilnehmerstation und der netzseitige Einrichtung gemäß den unabhängigen Ansprüchen gelöst.

Vorteilhafte Ausgestaltungen und Weiterbildungen der Erfindung sind Gegenstand der abhängigen Ansprüche.

Bei dem erfindungsgemäßen Verfahren zum Betrieb einer Teilnehmerstation eines Funkkommunikationssystems, werden Daten eines Dienstes von der Teilnehmerstation über einen ersten Übertragungskanal in einer ersten Funkzelle gesendet und/oder empfangen. Erfindungsgemäß empfängt die Teilnehmerstation während des Sendens und/oder Empfangens der Daten des Dienstes in der ersten Funkzelle wiederholt auf wenigstens einem Kontrollkanal wenigstens einer zweiten Funkzelle, um zu überwachen, ob dort eine für sie bestimmte Information übertragen wird, wobei der Empfang des Kontrollkanals erfolgt, ohne dass die Teilnehmerstation zuvor eine Nachricht in der ersten Funkzelle empfangen hat, die ein Übertragen der für die Teilnehmerstation bestimmten Information auf dem Kontrollkanal ankündigt.

Dadurch, dass die Teilnehmerstation den Kontrollkanal der zweiten Funkzelle ständig überwacht, während sie Daten des Dienstes in der ersten Funkzelle sendet und/oder empfängt, kann sie eine individuell für sie bestimmte Information automatisch in der zweiten Funkzelle empfangen, sobald diese Information netzseitig übertragen wird. Ist der Empfang der bestimmten Information beispielsweise für einen Betrieb der Teilnehmerstation in der zweiten Funkzelle erforderlich, kann die Übertragung der bestimmten Information netzseitig durchgeführt werden, ohne dass der Teilnehmerstation das bevorstehende Übertragen der bestimmten Information zuvor mittels einer in der ersten Funkzelle übertragenen Nachricht angekündigt, d.h. signalisiert werden muss. Das Überwachen des Kontrollkanals ist dahingehend zu verstehen, dass der Kontrollkanal empfangen wird, weil eine Übertragung der für die Teilnehmerstation erfolgen könnte, und nicht, weil der Teilnehmerstation bekannt ist, dass tatsächlich eine Übertragung erfolgen wird.

Selbstverständlich liegt es im Rahmen der Erfindung, dass die Teilnehmerstation weitere Kontrollkanäle weiterer Funkzellen gleichzeitig in gleicher Weise überwacht.

Eine bevorzugte Ausgestaltung der Erfindung sieht vor, dass die Teilnehmerstation von einer ersten netzseitigen Einrichtung Übertragungsparameter des Kontrollkanals der zweiten Funkzelle empfängt.

Übertragungsparameter des Kontrollkanals, die die Teilnehmerstation benötigt, um den Kontrollkanal zu empfangen, beispielsweise ein Spreizcode und/oder ein Verwürflungscode (channelisation code oder scrambling code) und/oder eine Frequenz eines zur Übertragung des Kontrollkanals verwendeten physikalischen Kanals, können alternativ oder zusätzlich auch in der Teilnehmerstation werksseitig eingespeichert vorliegen oder bereits vor dem Senden und/oder Empfangen der Daten des Dienstes beispielsweise über eine Datenleitung geladen werden.

Es ist von Vorteil, wenn die Teilnehmerstation, ausgelöst durch ein Empfangen der für sie bestimmten Information auf dem Kontrollkanal der zweiten Funkzelle, die Daten des Dienstes auf einem zweiten Übertragungskanal in der zweiten Funkzelle sendet und/oder empfängt.

Die Tatsache, dass die für die Teilnehmerstation bestimmte Information empfangen wird, kann als Auslöser (Trigger) verwendet werden, um alternativ oder zusätzlich zum Senden und/oder Empfangen der Daten des Dienstes in der ersten Funkzelle die Daten des Dienstes in der zweiten Funkzelle zu senden und/oder zu empfangen. Hierzu ist lediglich der Empfang der für die Teilnehmerstation bestimmten Information erforderlich, ohne dass durch die bestimmte Information weitere Informationen an die Teilnehmerstation übermittelt werden müssen. Der Empfang der für die Teilnehmerstation bestimmten Information führt beispielsweise zu einem Wechsel vom ersten auf den zweiten Übertragungskanal, d.h. zu einem Wechsel des Sendens und/oder Empfangens der Daten des Dienstes von der ersten zur zweiten Funkzelle. Es ist nicht erforderlich, dass der Teilnehmerstation ein Funkzellenwechsel oder das hinzufügen von Übertragungsressourcen durch den zweiten Übertragungskanal der zweiten Funkzelle im voraus in der ersten Funkzelle angekündigt, d.h. durch eine Nachricht signalisiert wird. Das Hinzufügen von Übertragungsressourcen sowie ein Funkzellenwechsel kann daher gemäß der Erfindung schneller und verlustfreier erfolgen, als dies mit einer entsprechenden Ankündigung in der ersten Funkzelle der Fall wäre.

In einer bevorzugten Weiterbildung der Erfindung sind der für die Teilnehmerstation bestimmten Information Übertragungsparameter des zweiten Übertragungskanals entnehmbar. Die Übertragungsparameter des zweiten Übertragungskanals müssen auf diese Weise der Teilnehmerstation nicht im voraus bekannt sein oder auf separatem Übertragungsweg mitgeteilt werden. Die Übertragungsparameter können netzseitig flexibel festgelegt und der Teilnehmerstation zeitnah, d.h. wenn benötigt, signalisiert werden.

Netzseitig ist ein Entscheidungskriterium erforderlich, das zu einem Übertragen der für die Teilnehmerstation bestimmten Information verwendet werden kann. Da die Teilnehmerstation möglichst fehlerfreie Datenübertragungen benötigt, die vorzugsweise auch mit hohen Datenraten erfolgen, ist es von Vorteil, wenn die Teilnehmerstation jeweils eine Signalqualität für die erste und für die zweite Funkzelle ermittelt und einer zweiten netzseitigen Einrichtung ein Maß für die Signalqualität der ersten und/oder der zweiten Funkzelle signalisiert.

Bei der ersten und zweiten netzseitigen Einrichtung kann es sich sowohl um dieselbe netzseitige Einrichtung als auch um unterschiedliche Einrichtungen handeln. Beispielsweise ist in einer Ausgestaltung der Erfindung die erste netzseitige Einrichtung eine Funknetzsteuerung und die zweite netzseitige Einrichtung eine Basisstation.

Anhand der Signalqualität kann netzseitig entschieden werden, ob die für die Teilnehmerstation bestimmte Information auf dem Kontrollkanal der zweiten Funkzelle übertragen werden soll. Werden Kontrollkanäle weiterer Funkzellen gleichzeitig überwacht, kann netzseitig ein Kontrollkanal einer Funkzelle, beispielsweise anhand der jeweiligen Signalqualität oder einer beispielsweise auf die Signalqualität der ersten Funkzellen normierten Signalqualität zum Übertragen der bestimmten Information ausgewählt werden. Beispielsweise kann dadurch das Senden und/oder Empfangen der Daten des Dienstes immer in der Funkzelle mit der größten Signalqualität erfolgen.

Eine Signalqualität ist beispielsweise ein Signal-zu-RauschVerhältnis, eine Bitfehlerrate oder eine Rahmenfehlerrate. Die Teilnehmerstation ermittelt eine Signalqualität beispielsweise anhand eines in der entsprechenden Funkzelle empfangenen Pilotkanals (pilot channels), beispielsweise der so genannte CPICH (Common Pilot Channel) gemäß dem UMTS-Standard. Als Maß für eine Signalqualität kann die Teilnehmerstation beispielsweise einen jeweiligen Wert der Signalqualität der Funkzellen als Nachricht auf einer Kontrollschicht (beispielsweise Schicht 3 gemäß dem UMTS-Standard [L3: layer 3 = radio control protocol layer]) signalisieren.

Um eine schnelle Signalisierung zu ermöglichen ist es von Vorteil, wenn die Teilnehmerstation das Maß für die Signalqualität durch eine Übertragung auf einer physikalischen Schicht signalisiert. Hierbei handelt es sich beispielsweise um eine Bitübertragung innerhalb einer Rahmenstruktur der Schicht 1 gemäß dem UMTS-Standard (L1: layer 1 = physical layer). Eine Basisstation, die die erste Funkzelle als netzseitige Einrichtung versorgt, kann dadurch das Maß der Signalqualität empfangen und anhand der empfangenen Bits ermitteln. Ist beispielsweise festgelegt, die Teilnehmerstation durch das Maß der Signalqualität ausschließlich diejenige Funkzelle signalisiert, die die beste Signalqualität aufweist, genügt es, die entsprechende Funkzelle durch entsprechende Bits zu codieren. Der tatsächlich ermittelte Wert der Signalqualität muss in diesem Fall nicht codiert oder signalisiert werden.

Bei dem erfindungsgemäßen Verfahren zum Betrieb einer netzseitigen Einrichtung eines Funkkommunikationssystems, werden Daten eines Dienstes von der netzseitigen Einrichtung über einen ersten Übertragungskanal einer ersten Funkzelle an eine Teilnehmerstation gesendet und/oder von der Teilnehmerstation empfangen. Erfindungsgemäß überträgt die netzseitige Einrichtung Übertragungsparameter wenigstens eines Kontrollkanals wenigstens einer zweiten Funkzelle an die Teilnehmerstation, damit die Teilnehmerstation während des Empfangens und/oder Sendens der Daten des Dienstes in der ersten Funkzelle wiederholt auf dem Kontrollkanal der zweiten Funkzelle empfängt, um zu überwachen, ob dort eine für sie bestimmte Information übertragen wird, wobei der Empfang des Kontrollkanals erfolgt, ohne dass die Teilnehmerstation zuvor eine Nachricht in der ersten Funkzelle empfangen hat, die ein Übertragen der für die Teilnehmerstation bestimmten Information auf dem Kontrollkanal ankündigt.

Vorteilhafter Weise sendet und/oder empfängt die netzseitige Einrichtung, aufgrund eines Sendens der für die Teilnehmerstation bestimmten Information auf dem Kontrollkanal der zweiten Funkzelle, die Daten des Dienstes auf einem zweiten Übertragungskanal in der zweiten Funkzelle.

Vorteilhafter Weise sind der für die Teilnehmerstation bestimmten Information Übertragungsparameter des zweiten Übertragungskanals entnehmbar.

Eine Weiterbildung der Erfindung sieht vor, dass das Übertragen der für die Teilnehmerstation bestimmten Information auf dem Kontrollkanal veranlasst wird, falls einem von der Teilnehmerstation ermittelten Maß der Signalqualität der ersten und/oder zweiten Funkzelle entnehmbar ist, dass die Signalqualität der zweiten Funkzelle einen Grenzwert überschreitet und/oder größer ist als eine Signalqualität der ersten Funkzelle.

Eine Ausgestaltung der Erfindung sieht vor, dass das Übertragen der für die Teilnehmerstation bestimmten Information durch eine Funkstation veranlasst wird, die sowohl die erste als auch die zweite Funkzelle versorgt.

Auf diese Weise kann ein Funkzellenwechsel oder das Hinzufügen von Übertragungsressourcen in der zweiten Funkzelle erfolgen, ohne dass eine Funknetzsteuerung, die die Funkstation steuert und die Daten des Dienstes an die Funkstation sendet und/oder von der Funkstation empfängt, über den Funkzellenwechsel bzw. das Hinzufügen von Übertragungsressourcen durch eine entsprechende Nachricht informiert werden muss. Eine Signalisierungslast kann somit netzseitig gering gehalten werden.

Vorteilhafter Weise wird das Übertragen der für die Teilnehmerstation bestimmten Information durch eine Funknetzsteuerung veranlasst, die eine erste Funkstation und eine zweite Funkstation steuert, falls die erste Funkstation die erste Funkzelle versorgt und die zweite Funkstation die zweite Funkzelle versorgt.

Das erfindungsgemäße Verfahren zum Betrieb einer netzseitigen Einrichtung sowie die zugehörigen Verfahrensvarianten geben die Verfahrensschritte an, die netzseitig erfolgen, um das erfindungsgemäße Verfahren zum Betrieb einer Teilnehmerstation sowie die entsprechenden Verfahrensvarianten zu ermöglichen. Hinsichtlich des erfindungsgemäßen Verfahrens zum Betrieb einer netzseitigen Einrichtung sowie der zugehörigen Verfahrensvarianten ergeben sich somit Vorteile, die den bereits im Zusammenhang mit dem Verfahren zum Betrieb einer Teilnehmerstation genannten Vorteilen entsprechen.

Die erfindungsgemäße Teilnehmerstation und die erfindungsgemäße netzseitige Einrichtung weisen jeweils alle Merkmale auf, die zur Durchführung des entsprechenden erfindungsgemäßen Verfahrens benötigt werden. Insbesondere können entsprechende Mittel zur Durchführung der einzelnen Verfahrensschritte oder Verfahrensvarianten vorgesehen sein.

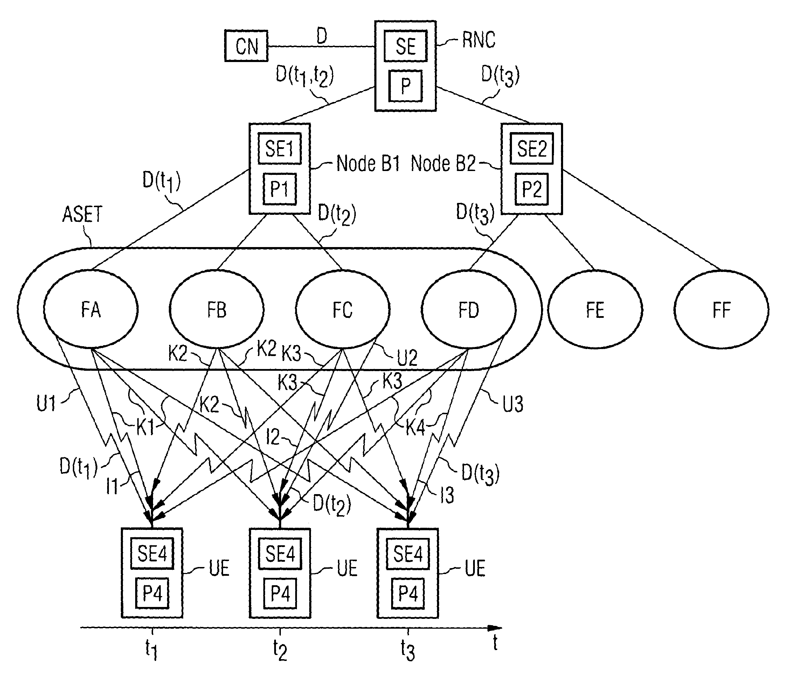

Die Erfindung wird im folgenden anhand eines in der Figur dargestellten Ausführungsbeispiels näher erläutert.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild-und/oder Tondaten, zum Fax-, Short Message Service SMS-, Multimedia Messaging Service MMS- und/oder Email-Versand und/oder zum Internet-Zugang.

Eine netzseitige Einrichtung ist beispielsweise eine Funkstation, z.B. eine Basisstation, die von einer Teilnehmerstation Nutz- und/oder Signalisierungsdaten empfängt und/oder Nutz-und/oder Signalisierungsdaten an die Teilnehmerstation sendet. Eine Basisstation ist über andere netzseitige Einrichtungen, beispielsweise eine die Basisstation steuernde Funknetzsteuerung, mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für z.B. Sprache und/oder Daten zu verstehen.

Nachfolgend wird als Funkstation eine Basisstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16.

Im Folgenden wird die Erfindung am Beispiel eines Mobilfunksystems nach dem UMTS-Standard beschrieben, ohne jedoch damit zum Ausdruck bringen zu wollen, dass die Erfindung hierauf beschränkt sein soll.

Im Folgenden wird die Erfindung anhand einer Übertragung von Daten eines mittels HSDPA (siehe z.B. 3GPP TS 25.308 V6.3.0 (2004-12)) übertragenen Dienstes beschrieben, ohne jedoch damit zum Ausdruck bringen zu wollen, dass die Erfindung hierauf beschränkt sein soll.

Die Erfindung lässt sich selbstverständlich in entsprechender Weise auch für Übertragungen in Aufwärtsrichtung oder für bidirektionale Übertragungen von Daten eines Dienstes durchführen.

Die Figur zeigt eine Funknetzsteuerung RNC eines Funkkommunikationssystems gemäß dem UMTS-Standard mit einer Sende- und Empfangseinheit SE sowie einem Prozessor P zum Steuern der Funknetzsteuerung RNC. Die Funknetzsteuerung ist über jeweils wenigstens eine Datenleitung mit einer ersten Basisstation NodeB1 und einer zweiten Basisstation NodeB2 verbunden. Über die Datenleitungen werden außer Nutzdaten, beispielsweise Sprach- oder Bilddaten eines Dienstes, auch Signalisierungsdaten zur Steuerung von Nutzdatenübertragungen und zur Steuerung der Basisstationen NodeB1, NodeB2 übertragen. Die Funknetzsteuerung RNC ist über eine Datenleitung mit einem Kernnetz CN verbunden.

Die erste Basisstation NodeB1 weist eine erste Sende- und Empfangseinheit SE1 sowie einen ersten Prozessor P1 zum Steuern der ersten Basisstation NodeB1 auf. Weiterhin versorgt die erste Basisstation NodeB1 eine erste, zweite und dritte Funkzelle FA, FB, FC. Die zweite Basisstation NodeB2 weist eine zweite Sende- und Empfangseinheit SE2 sowie einen zweiten Prozessor P2 zum Steuern der zweiten Basisstation NodeB2 auf. Weiterhin versorgt die zweite Basisstation NodeB2 eine vierte, fünfte und sechste Funkzelle FD, FE, FF. Das Versorgen einer Funkzelle durch eine Basisstation ist dahingehend zu verstehen, dass die Basisstation Datenübertragungen in der Funkzelle steuert. Beispielsweise sendet die Basisstation Daten an Teilnehmerstationen und empfängt Daten von Teilnehmerstationen, die in der Funkzelle eine Funkverbindung haben.

Weiterhin ist eine Teilnehmerstation UE an drei Positionen zu einem ersten, zweiten und dritten Zeitpunkt t₁, t₂, t₃ dargestellt. Die drei Positionen entsprechen jeweils einer geografischen Position der Teilnehmerstation UE relativ zu den Funkzellen FA, FB, FC, FD, FE, FF. Die Teilnehmerstation UE weist eine vierte Sende- und Empfangseinheit SE4 sowie einen vierten Prozessor P4 zum Steuern der Teilnehmerstation UE auf. Die Teilnehmerstation UE ist zum ersten Zeitpunkt t₁ für den Empfang von Daten D eines mittels HSDPA übertragenen Dienstes registriert und empfängt die Daten D des Dienstes über einen ersten Übertragungskanal U1 in der ersten Funkzelle FA. Die Daten D des Dienstes werden von einem Dienstanbieter über das Kernnetz CN an die Funknetzsteuerung RNC gesendet, von dort an die erste Basisstation NodeB1 übertragen und von der ersten Basisstation NodeB1 über den ersten Übertragungskanal U1 in der ersten Funkzelle FA an die Teilnehmerstation UE gesendet.

Bei dem Dienst handelt es sich beispielsweise um eine Video-übertragung, einen Spiele-Download oder um einen Sprachdienst, der beispielsweise mittels eines Internetprotokolls (IP-Protokoll) übertragen wird (Voice over IP).

Bei Übertragungskanälen, die gemäß dem HSDPA-Standard zur Übertragung der Nutzdaten dienen, handelt es sich um gemeinsam genutzte so genannte Transportkanäle (HS-DSCH). Der erste Übertragungskanal U1 in der ersten Funkzelle FA ist ein solcher HS-DSCH und steht somit mehreren Teilnehmerstationen zum Empfang von Daten zur Verfügung.

Damit die Teilnehmerstation UE weiß, zu welchem Zeitpunkt und mit welchen Übertragungsparametern sie die Daten D des Dienstes auf dem ersten Übertragungskanal U1 zu empfangen hat, benötigt sie vor jedem Empfangszeitraum eine für sie bestimmte erste Information I1, die die entsprechenden Informationen enthält. Die Teilnehmerstation UE empfängt daher wiederholt einen ersten Kontrollkanal K1 , bei dem es sich um einen HS-SCCH gemäß dem HSDPA-Standard handelt, da sie weiß, dass die erste Information I1 vor jeder Übertragung der Daten D des Dienstes auf dem ersten Kontrollkanal K1 übertragen wird. Beim Einrichten der HSDPA Übertragung in der ersten Funkzelle FA werden der Teilnehmerstation UE Übertragungsparametern des ersten Kontrollkanals K1 mitgeteilt und somit angekündigt, dass nun auf dem ersten Kontrollkanal K1 die erste Information I1 immer dann übertragen wird, wenn eine Übertragung von Daten D des Dienstes auf dem ersten Übertragungskanal U1 vorgesehen ist, d.h. zeitlich geplant ist (engl. scheduled).

Gemäß dem HSDPA-Standard gibt es zu einem Zeitpunkt immer nur einen Übertragungskanal, über den die Teilnehmerstation UE die Daten D des Dienstes empfängt. Mit dem Einrichten eines Übertragungskanals ist immer auch ein Einrichten eines assoziierten dedizierten Kanals (DCH: Dedicated Channel) verbunden. Der dezierten Kanal (DCH) wird von allen Funkzellen eines so genannten "active set" ASET gleichzeitig gesendet und/oder empfangen. In diesem Zusammenhang spricht man auch davon, dass sich der dedizierte Kanal im Softhandover befindet. In Aufwärtsrichtung wird der dedizierte Kanal beispielsweise zum Senden von Bestätigungssignalen (ACK: Acknowledge und NACK: Not Acknowledge) verwendet, anhand derer eine die Bestätigungssignale empfangende Basisstation feststellt, ob ein Datenpaket von der Teilnehmerstation UE korrekt (ACK) oder fehlerhaft (NACK) empfangen wurde. In dem in der Figur dargestellten Ausführungsbeispiel besteht der "active set" ASET der Teilnehmerstation aus der ersten, zweiten, dritten und vierten Funkzelle FA, FB, FC, FD.

Die Funkzelle FA wurde netzseitig beim Einrichten der Übertragung der Daten D des Dienstes zur Übertragung der Daten D des Dienstes festgelegt, da die Teilnehmerstation UE in der ersten Funkzelle FA Signale mit einer Signalqualität empfängt, die größer ist als die Signalqualität von Signalen aus den anderen Funkzellen FB, FC, FD des "active set" ASET. Eine Signalqualität der Funkzellen FA, FB, FC, FD des "active set" ASET wird beispielsweise von der Teilnehmerstation UE durch den nicht dargestellten Empfang von Pilotsignalen auf Pilotkanälen der Funkzellen FA, FB, FC, FD ermittelt. Ein Maß der Signalqualität aller Funkzellen FA, FB, FC, FD des "active set "ASET wird beispielsweise mittels einer ebenfalls nicht dargestellten Schicht 3 Nachricht (radio control protocol layer) an die Funknetzsteuerung RNC übertragen. Die Funknetzsteuerung RNC wählt anhand der Nachricht die beste Funkzelle, in diesem Beispiel die erste Funkzelle FA, aus. Alternativ kann die Nachricht auch direkt angeben, welche Funkzelle von der Teilnehmerstation am besten empfangen wird.

Während die Teilnehmerstation UE ab dem ersten Zeitpunkt t₁ auf dem ersten Übertragungskanal U1 die Daten D des Dienstes und auf dem ersten Kontrollkanal K1 die erste Information I1 empfängt, überwacht die Teilnehmerstation UE erfindungsgemäß gleichzeitig auch noch wenigstens einen weiteren gleichartigen Kontrollkanal in einer anderen Funkzelle des "active set" ASET. Die Teilnehmerstation UE überprüft durch wiederholtes Empfangen des wenigstens einen Kontrollkanals, ob auf dem Kontrollkanal eine für sie bestimmte Information übertragen wird, die ihr anzeigt, dass in der entsprechenden Funkzelle ein Zeitpunkt für das Übertragen von Daten D des Dienstes festgelegt wurde (engl.: scheduling). Zusätzlich gibt die für die Teilnehmerstation bestimmte Information, ebenso wie die erste Information I1, Übertragungsparameter für einen zu verwendenden Übertragungskanal in der entsprechenden Funkzelle an.

In diesem Ausführungsbeispiel wurden der Teilnehmerstation von der Funknetzsteuerung RNC gemeinsam mit der Angabe, welche Funkzellen den "active set" ASET bilden, Übertragungsparameter eines zweiten Kontrollkanals K2 der zweiten Funkzelle FB, eines dritten Kontrollkanals K3 der dritten Funkzelle FC und eines vierten Kontrollkanals K4 der vierten Funkzelle FD mitgeteilt. Die Teilnehmerstation UE überwacht daher den zweiten, dritten und vierten Kontrollkanal K2, K3, K4, um festzustellen, ob in einem der Kontrollkanäle K2, K3, K4 eine für sie bestimmte Information übertragen wird, ohne jedoch zu wissen, in welchem der Kontrollkanäle K2, K3, K4 eine für sie bestimmte Information gesendet wird, oder ob überhaupt eine für sie bestimmte Information übertragen wird. Der zweite, dritte und vierte Kontrollkanal K2, K3, K4 werden somit rein vorsorglich überwacht, so dass netseitig eine Übertragung einer für die Teilnehmerstation UE bestimmten Information auf einem beliebigen der Kontrollkanäle K2, K3, K4 erfolgen kann, ohne die Teilnehmerstation UE darüber zuvor in Kenntnis setzen zu müssen.

Die Teilnehmerstation UE bewegt sich in der Figur von links nach rechts, ermittelt dabei regelmäßig eine Signalqualität der Funkzellen des "acitve set" ASET und signalisiert ein Maß der Signalqualität an die erste Basisstation NodeB1. In diesem Ausführungsbeispiel signalisiert die Teilnehmerstation UE der ersten Basisstation NodeB1 als Maß der Signalqualität auf der physikalischen Schicht (Schicht 1) eine Bitfolge aus beispielsweise 3 Bits, die die Funkzelle mit der besten Signalqualität codiert. Bis zum zweiten Zeitpunkt t₂ hat die erste Funkzelle FA die beste Signalqualität und wird durch die übertragene Bitfolge codiert. Die erste Basisstation NodeB1 überträgt daher weiterhin die erste Information I1 auf dem ersten Kontrollkanal K1 und die Daten D des Dienstes auf dem ersten Übertragungskanal U1. Zum zweiten Zeitpunkt t₂ empfängt die Teilnehmerstation UE einen Pilotkanal der dritten Funkzelle FC mit der besten Signalqualität und signalisiert der ersten Basisstation NodeB1 dies durch eine entsprechende Bitfolge. Die erste Basisstation NodeB1 konfiguriert daraufhin einen zweiten Übertragungskanal U2 in der dritten Funkzelle FC und sendet auf dem dritten Kontrollkanal K3 eine für die Teilnehmerstation bestimmte zweite Information I2, die der Teilnehmerstation UE mitteilt, ab welchem Übertragungszeitintervall (TTI: Transmission Time Interval) und unter Verwendung welcher Codes (Spreizcode und/oder Verwürflungscode) der zweite Übertragungskanal U2 zu empfangen ist. Die zweite Information I2 wird von der Teilnehmerstation UE auf dem dritten Kontrollkanal K3 empfangen, da sie den dritten Kontrollkanal K3 überwacht, d.h. wiederholt empfängt.

Die erste Basisstation NodeB1 sendet im signalisierten Übertragungszeitintervalls die Daten D des Dienstes auf dem zweiten Übertragungskanal U2 und beendet gleichzeitig die Übertragung der Daten D des Dienstes auf dem ersten Übertragungskanal U1. Diesen Funkzellenwechsel des Übertragungskanals signalisiert die erste Basisstation NodeB1 nicht der Funknetzsteuerung RNC, da die dritte Funkzelle FC ebenfalls von der ersten Basisstation NodeB1 versorgt wird und daher die Daten D des Dienstes weiterhin von der Funknetzsteuerung RNC an die erste Basisstation NodeB1 zu übertragen sind. Das erfindungsgemäße Verfahren verzichtet - im Gegensatz zum HSDPA-Standard - darauf, der Teilnehmerstation durch eine Nachricht vor einem Funkzellenwechsel explizit zu signalisieren, dass ein Funkzellenwechsel zur dritten Funkzelle FC erfolgen soll und dass die Teilnehmerstation UE zu diesem Zweck den dritten Kontrollkanal K3 empfangen soll. Der erfindungsgemäße Funkzellenwechsel erfolgt somit schneller als dies bei einem entsprechenden Funkzellenwechsel gemäß dem HSDPA-Standard möglich ist.

Bis zum dritten Zeitpunkt t₃ empfängt die Teilnehmerstation UE die Daten D des Dienstes über den zweiten Übertragungskanal U2. Empfangszeitpunkte werden der Teilnehmerstation UE wie bereits zuvor für die erste Funkzelle FA beschrieben über den dritten Kontrollkanal K3 durch wiederholtes Übertragen einer für sie bestimmten Information, beispielsweise der zweiten Information I2 signalisiert. Zusätzlich überwacht die Teilnehmerstation die Kontrollkanäle K1, K2, K4 der anderen Funkzellen FA, FB, FD des "active set" ASET, um feststellen zu können, ob ein Funkzellenwechsel erfolgen soll.

Zum dritten Zeitpunkt t₃ signalisiert die Teilnehmerstation UE der ersten Basisstation NodeB1, dass die vierte Funkzelle FD die beste Signalqualität aufweist. Da die vierte Funkzelle FD nicht von der ersten Basisstation NodeB1 versorgt wird, kann ein Funkzellenwechsel nicht von der ersten Basisstation NodeB1 selbst durchgeführt werden. Die erste Basisstation NodeB1 signalisiert daher der Funknetzsteuerung RNC, dass die vierte Funkzelle FD die beste Signalqualität aufweist. Die Funknetzsteuerung RNC weist daraufhin die zweite Basisstation NodeB2, die die vierte Funkzelle FD versorgt, an, einen dritten Übertragungskanal U3 zu konfigurieren und gibt der zweiten Basisstation NodeB2 ein Übertragungszeitintervall vor, zu dem die Übertragung der Daten D des Dienstes auf dem dritten Übertragungskanal U3 zu beginnen hat. Das Übertragungszeitintervall teilt die Funknetzsteuerung RNC auch der ersten Basisstation NodeB1 mit und weist sie an, ab diesem Zeitpunkt die Übertragung der Daten D des Dienstes auf dem zweiten Übertragungskanal U2 zu beenden. Die zweite Basisstation NodeB2 signalisiert eine für die Teilnehmerstation UE bestimmte dritte Information I3 auf dem vierten Kontrollkanal K4, der wie oben ausgeführt von der Teilnehmerstation UE überwacht, d.h. regelmäßig empfangen wird.

Kurz vor dem signalisierten Übertragungszeitintervall sendet die Funknetzsteuerung RNC die Daten D des Dienstes zusätzlich an die zweite Basisstation NodeB2. Spätestens zum Beginn des signalisierten Übertragungszeitintervall unterbricht die Funknetzsteuerung RNC die Übertragung der Daten D des Dienstes an die erste Basisstation NodeB1 und die zweite Basisstation NodeB2 beginnt die Übertragung der Daten D des Dienstes auf dem dritten Übertragungskanal U3. Auch in diesem Fall wird erfindungsgemäß darauf verzichtet der Teilnehmerstation UE durch eine Nachricht explizit zu signalisieren, dass ein Funkzellenwechsel zur vierten Funkzelle FD erfolgen soll und dass die Teilnehmerstation UE zu diesem Zweck den vierten Kontrollkanal K4 empfangen soll.

Nach dem dritten Zeitpunkt t₃ empfängt die Teilnehmerstation UE die Daten D des Dienstes über den dritten Übertragungskanal U3. Empfangszeitpunkte werden der Teilnehmerstation UE wie bereits zuvor für die erste Funkzelle FA und die dritte Funkzelle FC beschrieben über den dritten Kontrollkanal K4 durch wiederholtes Übertragen einer für sie bestimmten Information, beispielsweise der dritten Information I3 signalisiert. Zusätzlich überwacht die Teilnehmerstation UE die Kontrollkanäle K1, K2, K3 der anderen Funkzellen FA, FB, FC des "active set" ASET, um gegebenenfalls wieder einen Funkzellenwechsel detektieren zu können.

Die Erfindung ermöglicht, dass eine Teilnehmerstation einen Funkzellenwechsel aufgrund der Überwachung der für einen Funkzellenwechsel in Frage kommenden Kontrollkanäle der entsprechenden Funkzellen selbst detektiert. Eine netzseitige Vorankündigung eines Funkzellenwechsels kann so mit Vorteil entfallen.

Alternativ oder zusätzlich zu einer Signalisierung eines Maßes der Signalqualität der Funkzellen des "active set" ASET in Form einer Nachricht auf der physikalischen Schicht (Schicht 1) an diejenige Basisstation, die den verwendeten Übertragungskanal bereithält, kann auch eine Schicht 3 Nachricht (radio control protocol layer) verwendet und wie im HSDPA-Standard an die Funknetzsteuerung RNC übertragen oder auch durch die Basisstation selbst verarbeitet werden.

Um von einer Funkzelle einer Basisstation zu einer anderen Funkzelle der selben Basisstation zu wechseln, kann die Basisstation alternativ oder zusätzlich für jede Funkzelle eine Empfangsqualität, z.B. eine Empfangsleistung, anhand des in jeder ihrer Funkzellen empfangenen, in der Figur nicht dargestellten, dedizierten Kanals (DCH) ermitteln. Weiterhin kann eine Verbindungsqualität des Übertragungskanal und somit eine Bewertung der entsprechenden Funkzelle anhand der in einem Zeitintervall von der Basisstation empfangenen Bestätigungssignale (ACK und/oder NACK) ermittelt und für eine Entscheidung über einen Funkzellenwechsel berücksichtigt werden.

Selbstverständlich ist erfindungsgemäß auch vorgesehen, dass bei einem Funkzellenwechsel zumindest zeitweise die Daten D des Dienstes über den ersten und zweiten Übertragungskanal U1, U2 bzw. über den zweiten und dritten Übertragungskanal U2, U3 gleichzeitig erfolgt. Die Erfindung sieht also einen Funkzellenwechsel mit Softhandover vor.

## Patentansprüche

1. Verfahren zum Betrieb einer Teilnehmerstation (UE) eines Funkkommunikationssystems, bei dem über einen ersten Übertragungskanal (U1; U2) in einer ersten Funkzelle (FA; FC) Daten (D) eines Dienstes von der Teilnehmerstation (UE) gesendet und/oder empfangen werden,
**dadurch gekennzeichnet,**
**dass**
die Teilnehmerstation (UE) während des Sendens und/oder Empfangens der Daten (D) des Dienstes in der ersten Funkzelle (FA; FC) wiederholt auf wenigstens einem Kontrollkanal (K2, K3, K4; K1, K2, K4) wenigstens einer zweiten Funkzelle (FB, FC, FD; FA, FB, FD) empfängt, um zu überwachen, ob dort eine für sie bestimmte Information (I2; I3) übertragen wird, wobei der Empfang des Kontrollkanals (K2, K3, K4; K1, K2, K4) erfolgt, ohne dass die Teilnehmerstation (UE) zuvor eine Nachricht in der ersten Funkzelle (FA; FC) empfangen hat, die ein Übertragen der für die Teilnehmerstation (UE) bestimmten Information (I2; I3) auf dem Kontrollkanal (K2, K3, K4; K1, K2, K4) ankündigt.

2. Verfahren nach Anspruch 1,
**dadurch gekennzeichnet,**
**dass** die Teilnehmerstation (UE) von einer ersten netzseitigen Einrichtung (RNC) Übertragungsparameter des Kontrollkanals (K2, K3, K4; K1, K2, K4) der zweiten Funkzelle (FB, FC, FD; FA, FB, FD) empfängt.

3. Verfahren nach Anspruch 1 oder 2,
**dadurch gekennzeichnet,**
**dass** die Teilnehmerstation (UE), ausgelöst durch ein Empfangen der für sie bestimmten Information (I2; I3) auf dem Kontrollkanal (K3; K4) der zweiten Funkzelle (FC; FD), die Daten (D) des Dienstes auf einem zweiten Übertragungskanal (U2; U3) in der zweiten Funkzelle (FC; FD) sendet und/oder empfängt.

4. Verfahren nach Anspruch 3,
**dadurch gekennzeichnet,**
**dass** der für die Teilnehmerstation (UE) bestimmten Information (I2; I3) Übertragungsparameter des zweiten Übertragungskanals (U2; U3) entnehmbar sind.

5. Verfahren nach einem der Ansprüche 1, 2, 3 oder 4,
**dadurch gekennzeichnet,**
**dass** die Teilnehmerstation (UE) jeweils eine Signalqualität für die erste (FA; FC) und für die zweite Funkzelle (FB, FC, FD; FA, FB, FD) ermittelt und einer zweiten netzseitigen Einrichtung (NodeB) ein Maß für die Signalqualität der ersten (FA; FC) und/oder der zweiten Funkzelle (FB, FC, FD; FA, FB, FD) signalisiert.

6. Verfahren nach Anspruch 5,
**dadurch gekennzeichnet,**
**dass** die Teilnehmerstation (UE) das Maß für die Signalqualität durch eine Übertragung auf einer physikalischen Schicht signalisiert.

7. Verfahren zum Betrieb einer netzseitigen Einrichtung (RNC) eines Funkkommunikationssystems, bei dem über einen ersten Übertragungskanal (U1; U2) einer ersten Funkzelle (FA; FC) Daten (D) eines Dienstes von der netzseitigen Einrichtung (RNC) an eine Teilnehmerstation (UE) gesendet und/oder von der Teilnehmerstation (UE) empfangen werden,
**dadurch gekennzeichnet,**
**dass**
die netzseitige Einrichtung (RNC) Übertragungsparameter wenigstens eines Kontrollkanals (K2, K3, K4; K1, K2, K4) wenigstens einer zweiten Funkzelle an die Teilnehmerstation (UE) überträgt, damit die Teilnehmerstation (UE) während des Empfangens und/oder Sendens der Daten (D) des Dienstes in der ersten Funkzelle (FA; FC) wiederholt auf dem Kontrollkanal (K2, K3, K4; K1, K2, K4) der zweiten Funkzelle (FB, FC, FD; FA, FB, FD) empfängt, um zu überwachen, ob dort eine für sie bestimmte Information (I2; I3) übertragen wird, wobei der Empfang des Kontrollkanals (K2, K3, K4; K1, K2, K4) erfolgt, ohne dass die Teilnehmerstation (UE) zuvor eine Nachricht in der ersten Funkzelle (FA; FC) empfangen hat, die ein Übertragen der für die Teilnehmerstation (UE) bestimmten Information (I2; I3) auf dem Kontrollkanal (K2, K3, K4; K1, K2, K4) ankündigt.

8. Verfahren nach Anspruch 7,
**dadurch gekennzeichnet,**
**dass** die netzseitige Einrichtung (RNC), aufgrund eines Sendens der für die Teilnehmerstation (UE) bestimmten Information (I2; I3) auf dem Kontrollkanal (K3; K4) der zweiten Funkzelle (FC; FD), die Daten (D) des Dienstes auf einem zweiten Übertragungskanal (U2; U3) in der zweiten Funkzelle (FC; FD) sendet und/oder empfängt.

9. Verfahren nach Anspruch 8,
**dadurch gekennzeichnet,**
**dass** der für die Teilnehmerstation (UE) bestimmten Information (I2; I3) Übertragungsparameter des zweiten Übertragungskanals (U2; U3) entnehmbar sind.

10. Verfahren nach einem der Ansprüche 7, 8 oder 9,
**dadurch gekennzeichnet,**
**dass** das Übertragen der für die Teilnehmerstation (UE) bestimmten Information (I2; I3) auf dem Kontrollkanal (K3; K4) veranlasst wird, falls einem von der Teilnehmerstation (UE) ermittelten Maß der Signalqualität der ersten (FA; FC) und/oder zweiten Funkzelle (FB, FC, FD; FA, FB, FD) entnehmbar ist, dass die Signalqualität der zweiten Funkzelle (FC; FD) einen Grenzwert überschreitet und/oder größer ist als eine Signalqualität der ersten Funkzelle (FA; FC).

11. Verfahren nach Anspruch 10,
**dadurch gekennzeichnet,**
**dass** das Übertragen der für die Teilnehmerstation (UE) bestimmten Information (I2) durch eine Funkstation (NodeB1) veranlasst wird, die sowohl die erste (FA) als auch die zweite Funkzelle (FC) versorgt.

12. Verfahren nach Anspruch 10 oder 11,
**dadurch gekennzeichnet,**
**dass** das Übertragen der für die Teilnehmerstation (UE) bestimmten Information (I3) durch eine Funknetzsteuerung (RNC) veranlasst wird, die eine erste Funkstation (NodeB1) und eine zweite Funkstation (NodeB2) steuert, falls die erste Funkstation (NodeB1) die erste Funkzelle (FC) versorgt und die zweite Funkstation (NodeB2) die zweite Funkzelle (FD) versorgt.

13. Teilnehmerstation (UE) für ein Funkkommunikationssystems, mit Mitteln (SE4) zum Senden und/oder Empfangen von Daten (D) eines Dienstes über einen ersten Übertragungskanal (U1; U2) in einer ersten Funkzelle (FA; FC),
**gekennzeichnet,**
**durch** Steuermittel (P4) und Empfangsmittel (SE4), die derart ausgebildet sind, dass die Teilnehmerstation (UE) während des Sendens oder Empfangens der Daten (D) des Dienstes in der ersten Funkzelle (FA; FC) wiederholt auf wenigstens einem Kontrollkanal (K2, K3, K4; K1, K2, K4) wenigstens einer zweiten Funkzelle (FB, FC, FD; FA, FB, FD) empfängt, um zu überwachen, ob dort eine für sie bestimmte Information (I2; I3) übertragen wird, wobei der Empfang des Kontrollkanals (K2, K3, K4; K1, K2, K4) erfolgt, ohne dass die Teilnehmerstation (UE) zuvor eine Nachricht in der ersten Funkzelle (FA; FC) empfangen hat, die ein Übertragen der für die Teilnehmerstation (UE) bestimmten Information (I2; I3) auf dem Kontrollkanal (K2, K3, K4; K1, K2, K4) ankündigt.

14. Netzseitige Einrichtung (RNC) für ein Funkkommunikationssystems, mit Mitteln (SE) zum Senden und/oder Empfangen von Daten (D) eines Dienstes an und/oder von einer Teilnehmerstation (UE) über einen ersten Übertragungskanal (U1, U2) einer ersten Funkzelle (FA; FC),
**gekennzeichnet,**
**durch** Steuermittel (P) und Sendemittel (SE), die derart ausgebildet sind, dass die netzseitige Einrichtung (RNC) Übertragungsparameter wenigstens eines Kontrollkanals (K2, K3, K4; K1, K2, K4) wenigstens einer zweiten Funkzelle (FB, FC, FD; FA, FB, FD) an die Teilnehmerstation (UE) überträgt, damit die Teilnehmerstation (UE) während des Empfangens und/oder Sendens der Daten (D) des Dienstes in der ersten Funkzelle (FA; FC) wiederholt auf dem Kontrollkanal (K2, K3, K4; K1, K2, K4) der zweiten Funkzelle (FB, FC, FD; FA, FB, FD) empfängt, um zu überwachen, ob dort eine für sie bestimmte Information (I2; I3) übertragen wird, wobei der Empfang des Kontrollkanals (K2, K3, K4; K1, K2, K4) erfolgt, ohne dass die Teilnehmerstation (UE) zuvor eine Nachricht in der ersten Funkzelle (FA; FC) empfangen hat, die ein Übertragen der für die Teilnehmerstation (UE) bestimmten Information (I2; I3) auf dem Kontrollkanal (K2, K3, K4; K1, K2, K4) ankündigt.
